# EUROPEAN PATENT APPLICATION

(11) **EP 4 786 227 A1**
(43) Date of publication of application: **05.08.2026**
(21) Application number: 25155676.7
(22) Date of filing: 03.02.2025
(51) Int. Cl.: B60H 1/32, B60H 1/00, F04B 39/00

(54) **HEAT PUMP SYSTEM HAVING A REINFORCING ELEMENT**

(71) Applicant: Valeo Electrification, 95892 Cergy Pontoise (FR)
(72) Inventor: FIENE, Andreas, 96476 Bad Rodach (DE); SESHA-SAI, Lohith-Sriram-Pavan, 600130 Chennai (IN); KANAGARAJ, Dhineshkumar, 600130 Chennai (IN); DALKIDIS, Charilaos, 96476 Bad Rodach (DE)
(74) Representative: Valeo Powertrain Systems

(57) **Abstract**

The invention concerns a sealed envelope for a heat pump module for a vehicle, said sealed envelope extending according to a main axis (X) and being intended to encapsulate a compression unit (10) in an internal area (512) delimited by an external surface (511) of the sealed envelope, characterized in that it comprises :
- three supporting paws (53) extending outwards the external surface (511), a first of the three supporting paws extending according to the main axis (X) and the second and third (53) of the three supporting paws extending on both sides from the main axis (X), and
- a reinforcing element (60) extending between the three supporting paws, said reinforcing element (60) being configured to be attached to the chassis of the vehicle.

## Description

### TECHNICAL FIELD

The invention relates in general to a refrigerant heat pump system, and in particular to a compressor encapsulation frame intended to encapsulate a portion of a compression unit of a heat pump module. The invention also covers a heat pump assembly comprising such compressor encapsulation frame.

In hybrid and electric vehicles, a refrigerant heat pump system contributes to the cooling and heating of the interior of the vehicle but also the cooling and heating of the battery. Such a refrigerant heat pump system operates thanks to an electrical compressor. Air or a refrigerant is fed to the compressor, the compressor compresses it and subsequently discharges it. The main component of a refrigerant heat pump system is the compressor required to compress the refrigerant. Such a refrigerant heat pump module is typically attached to the vehicle chassis. It raises various problems.

On the one hand, the compressor is a source of vibrations when running. These vibrations constitute noise generated by their transmission to the vehicle on which the refrigerant heat pump module is installed.

Noise associated with the vibrations from the refrigerant heat pump module should be reduced as much as possible. For that purpose, existing solutions use damper elements. For example, one damper element may be firmly screwed to the chassis of the vehicle, and another damper element may be fixed to the housing of the refrigerant heat pump module, for example the compressor.

On the other hand, in order to respond to cooling requirements of the market needs, compressors used in a heat pump system should offer more compression capacities. Such compressors are heavier. As heat pump assemblies are attached to the vehicle chassis, the increased weight resulting from the increased cooling requirements should be handled by the attaching system fixing the frame encapsulating the compressor to the chassis. Existing solutions use traditional fastening systems such as screws between the chassis and the frame of the heat pump module. Such an arrangement is not compatible with space constraints in the automotive industry.

The invention aims to overcome all or some of the abovementioned problems by proposing a heat pump module with an encapsulated compressor presenting a reinforcing element that enables both to attach the heat pump module to the chassis of a vehicle and to withstand the mechanical constraints in a compact manner.

### GENERAL DEFINITION OF THE INVENTION

To this end, one subject of the invention is a sealed envelope for a heat pump module for a vehicle, said sealed envelope extending according to a main axis and being intended to encapsulate a compression unit in an internal area delimited by an external surface of the sealed envelope, characterized in that it comprises :
- three supporting paws extending outwards the external surface, a first of the three supporting paws extending according to the main axis and the second and third of the three supporting paws extending on both sides from the main axis, and
- a reinforcing element extending between the three supporting paws, said reinforcing element being configured to be attached to the chassis of the vehicle.

Instead of using an external metal bracket as it is the case in the solutions of the prior art, the sealed envelope of the invention is based on the combination of a reinforcing element with supporting paws placed at various locations of the external surface of the sealed envelope. The reinforcing element is integrated inside the sealed envelope. It enables a single assembly of a light-weight construction, easy to assemble by screwing the reinforcing element on the supporting paws.

The sealed envelope defines an internal space in which a compression unit is intended to be placed. In other words, the sealed envelope is an accommodation for the compression unit and a protective shell against external shocks or humidity.

Thanks to the features of the invention, the resulting sealed envelope is compact and robust. The reinforcing element forms a fixing element to the chassis. The fixing points of the reinforcing element on the supporting paws of the sealed envelope distribute the forces applied to the sealed envelope along the reinforcing element. The role of the reinforcing element is twofold: on the one hand it forms a suspension point for attaching the heat pump module to the chassis of the vehicle, and on the other hand, it splits the force to which the heat pump module is subjected to into three smaller forces distributed at three different locations of the sealed envelope. Another major advantage of the reinforcing element is that it is incorporated in the sealed envelope, thus meeting the market demands for compactness of heat pump module.

The reinforcing element might be metallic, for example in aluminium or in steel, or it might comprise glass fibers. These materials are shock-resistant, present a high-level strength, and offer a good thermal and acoustic insulation, which is of particular interest as the reinforcing element is intended to be placed in the vicinity of a running compression unit.

According to an optional feature of the invention, the sealed envelope is made of plastic. Such a sealed envelope is easy to produce thanks to well-controlled injection moulding processes. Furthermore it results in a light-weight casing having lower cost compared with a metal casing. Alternatively, the sealed envelope is made of composite material, such as organosheet. Such a material offers a combination of strength, flexibility and lightness, and feature a high strength-to-weight ratio.

The invention also covers a heat pump module for a vehicle comprising such a sealed envelope and a compression unit extending according to the main axis, said compression unit being disposed in the internal area and encapsulated in the sealed envelope.

According to an optional feature of the invention, the sealed envelope comprises:
- a one-piece casing encapsulating a first of two portions of the compression unit, comprising a junction surface surrounding the first portion of the compression unit, the one-piece casing comprising an inner skin having a complementary form to the first portion of the compression unit, and an outer skin,
- a housing encapsulating the second of the two portions of a compression unit, said housing comprising a joining surface surrounding the second portion of the compression unit and forming a surface contact with the junction surface.

The sealed envelope is obtained by joining the one-piece casing and the housing along the junction surface of the one-piece casing and the joining surface of the housing and placing the reinforcing element in its position respectively to the supporting paws. The one-piece casing and the housing can be bolted together or held together by any appropriate fixing means. When in use, the compression unit is placed inside the sealed envelope and is entirely wrapped by the sealed envelope. The compression unit is therefore protected from all aggressions, for example external shocks, humidity, or dust. The sealing of the one-piece casing and the housing is performed along the junction surface and the joining surface when the one-piece casing and the housing are joined. The junction surface and the joining surface may extend in a junction plane, or the junction surface and the joining surface may extend according to one plane for a part of them and according to a second plane for another part of them. As an alternative, the junction surface and the joining surface may be curved. The junction surface and the joining surface have the same forms, so as to be in contact when the one-piece casing and the housing are joined.

For the ease of understanding, the invention will be described with a junction surface and a joining surface extending in a junction plane. But a person skilled in the art, when reading the description of the invention, understands that the invention is not limited by the form that the junction surface and the joining surface may have.

The heat pump module of the invention enables the encapsulation of the compression unit between the one-piece casing and the housing. As mentioned above, the sealing of one-piece casing with the housing is performed along the junction plane. The first portion of the compression unit is lodged inside the one-piece casing, i.e. above the junction plane and the second portion of the compression unit is lodged inside the housing, i.e. below the junction plane. In other words, the junction plane separates the sealed envelope lengthwise. As the sealed envelope is intended to be suspended to a chassis of a vehicle, the longitudinal position of the junction plane ensures the robustness of the whole sealed envelope and thus the robustness of the heat pump module.

According to an optional feature of the invention, the heat pump module comprises an acoustic layer, typically 15 to 30 mm thick, disposed between the compression unit and the sealed envelope. The acoustic layer may be composed of foam.

Thanks to the acoustic layer, the compression unit does not form any direct contact with the sealed envelope. The acoustic layer absorbs the high frequencies when the compression unit is running. It can contribute to a noise reduction of the order of 10% compared with solutions without any acoustic layer.

In an optional feature of the invention, the acoustic layer is press fitted onto the compression unit. The acoustic layer has the external form of the compression unit and fits perfectly on the compression unit. In other words, the outer skin of the compression unit and the inner skin of the acoustic layer are mostly identical. It should be understood that the distance between the outer skin of the compression unit and the inner skin of the acoustic layer is a few millimeters at most.

According to an optional feature of the invention, the reinforcing element comprises two legs, a first of the two legs extending from the second supporting paw to the third supporting paw and the second of the two legs extending from the first supporting paw to the first leg.

The first leg connects two opposite sides of the sealed envelope whereas the second leg connects a third side, extending between the said two opposite sides, to the first leg. The second leg connecting the first leg in the middle of the first leg, the reinforcing element has the form of a curved T-shape, each of the three ends of the reinforcing element being connected to one side of the sealed envelope. The curved shape allows it to surround the compressor unit when positioned inside the internal space of the sealed envelope. The reinforcing element forms a cross strut for the sealed envelope and a stiffening rib for the heat pump module.

According to an embodiment of the invention, the three supporting paws extend from the one-piece casing and the outer skin of the one-piece casing comprises a first groove extending from the second supporting paw to the third supporting paw and a second groove extending from the first supporting paw to the first groove.

In this embodiment, the reinforcing element is not in the internal space of the sealed envelope. The reinforcing element is on the outer skin of the one-piece casing and extends in the grooves of the one-piece casing. The first leg has two apertures, one at each end of the leg, and the second leg has at least one aperture at one end of the leg. The apertures of the leg are facing the supporting paws and are configured to receive a screw in order to rigidly fix the legs of the reinforcing member to the sealed envelope. The one-piece casing is fixed to the housing thanks to an appropriate fixing system, for example screws.

According to another embodiment of the invention, the three supporting paws extend from the housing and the acoustic layer comprises a first groove extending from the second supporting paw to the third supporting paw and a second groove extending from the first supporting paw to the first groove. The first groove extending from the second supporting paw to the third supporting paw is to be understood as extending in the acoustic layer from and respectively to the part of the acoustic layer facing the corresponding supporting paw.

In this embodiment, the compression unit is wrapped by an acoustic layer. The first groove and the second groove for lodging the reinforcing element extend along the acoustic layer. When the compression unit is positioned inside the housing, the first and second grooves are so positioned that, in an axial projection in the junction plane, they superimpose with the first and second legs of the reinforcing element.

Thanks to this feature, the reinforcing element is integrated in the acoustic layer. It means that it does not require additional space to be included inside the sealed envelope as it is inserted in the volume occupied by components that are present. Further to bringing robustness to the sealed envelope, it contributes to the compactness of the assembly.

According to an optional feature of the invention, one of the two legs of the reinforcing element comprises a fixing part and the outer skin of the one-piece casing comprises an aperture facing the fixing part. The fixing part of the reinforcing element faces the aperture of the one-piece casing. The aperture is an access to the reinforcing element from the outside of the heat pump module. The heat pump module can therefore be fixed to the chassis of the vehicle thanks to the fixing part through the aperture. The fact that one fixing part can hold the heat pump module is rendered possible thanks to the reinforcing element that distributes the force applied to the sealed envelope at various points of the sealed envelope.

According to an optional feature of the invention, the outer skin of the one-piece casing comprises at least one housing portion configured to accommodate an external component among a heat exchanger, an accumulator, a valve block assembly, said housing portion comprising an interconnection surface being of complementary form to said external component.

The one-piece casing of the invention enables carrying additional components, such as air-conditioning or heat pump components. The invention makes it possible to easily connect a large variety of external components to the one-piece casing, without any additional connection systems. One or more external components can therefore be mounted to the one-piece casing from independent directions around the compression unit. They can be mounted by screwing or clipping. This results in a compact and modular casing for the compression unit and the associated components of a heat pump assembly.

According to an optional feature of the invention, the heat pump module comprises decoupling elements connected to the housing and a chassis of the vehicle. The decoupling elements are added to the housing and fixed to the chassis. They decouple the sealed envelope to the vehicle chassis. The decoupling elements may be in rubber. Their role is to decrease the noise from the compression unit by absorbing the low frequencies. Combined with the acoustic layer surrounding the compression unit, it results in a decrease of the noise from the compression unit when running.

According to another optional feature of the invention, the housing may comprise at least one aperture on the lower part, that is to say on the part opposite to the junction plane. This aperture makes it possible to drain water from the compression unit and avoid water accumulation inside the sealed envelope.

The invention also concerns a heat pump assembly for a vehicle, particularly for an electric vehicle, comprising a heat pump module as described above and at least one external component among a heat exchanger, an accumulator, a valve block assembly, accommodated in at least one housing portion of the one-piece casing.

Thanks to the specific shape of the one-piece casing, the external component(s) are carried by the one-piece casing. The heat pump assembly of the invention forms an assembly integrating the external components in a compact way. The heat pump assembly of the invention regroups the external components in a reduced volume compared with solutions of the prior art. The heat pump assembly contributes to the reduction of weight and volume within the vehicle in which it is embedded. Thanks to the invention, the heat pump assembly of the invention offers a low space consumption compared to heat pump assemblies of the prior art with separate component fixations and an additional metal frame for maintaining it to the chassis.

According to another optional feature of the invention, the sealed envelope may comprise a guide groove intended to lodge pipes required to connect the external components of the heat pump assembly. Such a guide groove contributes to the compactness of the heat pump assembly.

### BRIEF DESCRIPTION OF THE FIGURES

Further features, details and advantages of the invention will become apparent upon reading the description given with reference to the appended drawings, which are given by way of example an in which:
[Fig. 1] represents a compression unit inserted into a bottom housing for a heat pump module according to the invention,
[Fig. 2] is an isometric view of the one-piece casing and a bottom housing of a heat pump module according to the invention,
[Fig. 3] represents the bottom housing of the heat pump module of the invention with a reinforcing element,
[Fig. 4] represents a heat pump module of the invention, on which heat pump components are installed.

### DETAILED DESCRIPTION

The characteristics, variants and various embodiments of the invention, as they have been described or as they will be presented in the detailed description which follows, can be associated with each other, according to various combinations, to the extent that they are not incompatible or exclusive with respect to each other. In particular, it will be possible to imagine variants of the invention comprising only a selection of characteristics described subsequently isolated from the other characteristics described, if this selection of characteristics is sufficient to confer a technical advantage and/or to differentiate the invention compared to the prior art.

For the sake of clarity, the same elements are designated by the same references in the different figures.

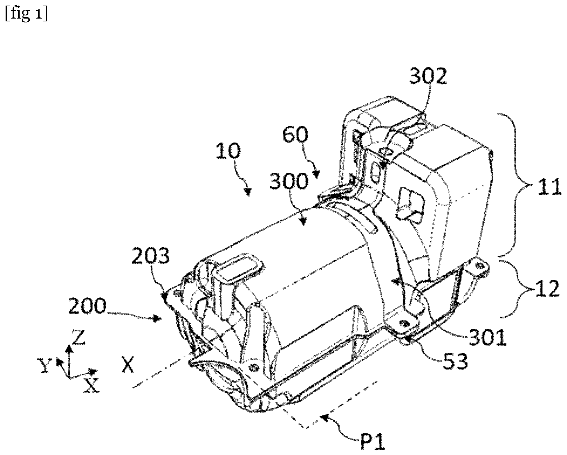

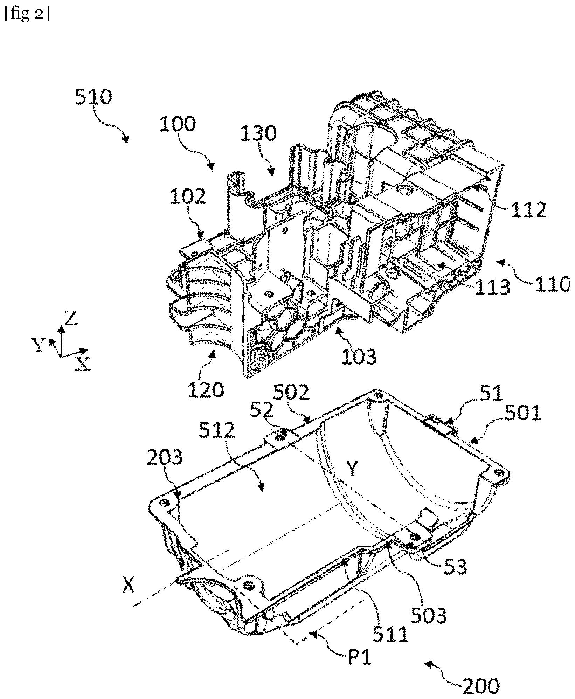

Figure 1 aims at explaining the context of the invention and represents a compression unit 10 inserted into a bottom housing 200 for a heat pump module according to the invention. The invention covers a sealed envelope 510, as visible in figure 2, for a heat pump module for a vehicle. Such a sealed envelope 510 is intended to encapsulate a compression unit 10. Before describing the specific details of the invention, the sealed envelope will be described based on figure 2.

Figure 2 is an isometric view of the one-piece casing 100 and a bottom housing 200 of a heat pump module according to the invention. The sealed envelope 510 comprises a one-piece casing 100 and a housing 200. The one-piece casing 100 is intended to partly receive a compression unit 10 of a heat pump assembly 500. More precisely, a compression unit 10 can be considered as extending according to a main axis X. It can be divided lengthwise by a plane P1 (containing the main axis X) in two portions 11, 12. The portion 11 is above the plane P1 and the portion 12 is below the plane P1. As can be seen in figure 1, the one-piece casing 100 is configured to encapsulate the portion 11 of the compression unit 10. As the plane P1 is a longitudinal plane, the one-piece casing 100 therefore encapsulates the upper part 11 of the compression unit 10.

The one-piece casing 100 advantageously comprises an inner skin having a complementary form to the upper portion 11 of the compression unit 10. The inner skin may be seen as a surface facing the inside of the one-piece casing, thereby delimiting an internal space intended to accommodate the upper portion 11 of the compression unit 10. The complementary form of the inner skin to the upper portion 11 means that the one-piece casing 100 is formed such that the inner skin is as closely as possible to the upper portion 11. As a consequence, the inner skin follows the shape of the upper portion 11 of the compression unit 10 for the sake of compactness of the one-piece casing. In other words, the one-piece casing 100 surrounds the portion 11 of the compression unit 10 as closely as possible. The distance between the inner skin and the external surface of the compression unit is in the order of a few millimeters.

The one-piece casing 100 comprises an outer skin 102. The outer skin 102 extends along the external surface of the one-piece casing 100. It is to be understood that the one-piece casing is defined between its inner skin and its outer skin 102, and forms an accommodation for the upper part of the compression unit in the internal shape.

In an optional feature of the invention, the one-piece casing is made of plastic. Such a one-piece casing is a light-weight casing. On top of that, a one-piece casing in plastic is easy to produce thanks to processes like injection moulding. Such processes offer the possibility of enabling various forms for the casing by adapting the form of the mould.

The one-piece casing 100 comprises a junction surface 103. As explained above, the invention will be described in the configuration in which the junction surface 103 extends in a junction plane, corresponding to the plane P1. This is an example of the one-piece casing of the invention. The junction surface 103 may have any other forms. When the compression unit 10 is placed within the sealed envelope 510, the junction surface 103 surrounds the first portion 11 of the compression unit 10.

The housing 200 comprises a joining surface 203 extending in the junction plane P1. Here again, this is an example of the housing of the invention. The joining surface 203 has the same form as the junction surface 103. When the compression unit 10 is placed within the sealed envelope 510, the joining surface surrounds the second portion 12 of the compression unit 10 and forms a surface contact with the junction surface.

The one-piece casing 100 and the housing 200 form the sealed envelope that encapsulates the compression unit 10. The sealed envelope is therefore both an accommodation and a protective shell for the compression unit 10.

As mentioned above, the compression unit 10 has a first portion 11 and a second portion 12. The second portion 12 is considered as a bottom part of the compression unit 10. The second portion 12 is the portion of the compression unit 10 that is intended to be housed in the bottom housing 200 of a heat pump module. The sealed envelope 510 comprises the one-piece casing 100 that is the upper part of the sealed envelope and the housing 200 that is the bottom part of the sealed envelope. For the same reason as for the one-piece casing 100, the housing 200 may be made of plastic. The housing 200 comprises a joining surface 203 that, in our example, extends in the junction plane P1. As can be seen in figure 2, the joining surface 203 delimits an inside space in the housing 200. When the compression unit 10 is placed inside the housing 200, the joining surface 203 surrounds the second portion 12 of the compression unit 10. The joining surface 203 also forms a surface contact with the junction surface 103 of the one-piece casing 100. The one-piece casing 100 is to be placed above the housing 200 in view of the plane P1. Together, the one-piece casing 100 and the housing 200 forms the sealed envelope 510. When the compression unit 10 is placed inside the sealed envelope, the junction surface 103 of the one-piece casing 100 is in contact with the joining surface 203 of the housing 200. Thanks to this surface contact between the junction surface and the joining surface, the sealed envelope is closed and wraps the compression unit 10. From the description made above, it appears clear that the surface contact is obtained in the plane P1 which is a virtual separation between the first portion 11 and the second portion 12 of the compression unit 10 as well as the physical separation between the one-piece casing 100 and the housing 200. This arrangement facilitates the assembly of the compression unit 10 inside the sealed envelope: the compression unit 10 is placed inside the housing 200, the one-piece casing 100 is superimposed on the housing 200 so that its junction surface 103 coincides with the joining surface 203 of the housing 200. The one-piece casing and the housing can be fixedly connected together by an appropriate fixing system, such as screws for example.

The invention also concerns a heat pump module 500 for a vehicle comprising a compression unit 10. Such a heat pump module comprises the one-piece casing 100 described above. The one-piece casing 100 encapsulates the first portion 11 of the compression unit 10. The heat pump module 500 also comprises the housing 200 as described above. The housing 200 encapsulates the second portion 12 of the compression unit 10. The connection between the housing 200 and the one-piece casing 100 is performed at the contact between both, i.e. the joining surface 203 of the housing 200 is in contact with the junction surface 103 of the one-piece casing 100. From the description above, it is to be understood that the joining surface 203 of the housing 100 surrounds the second portion 12 of the compression unit 10, while the junction surface 103 of the one-piece casing 100 surround the first portion 11 of the compression unit 10.

This arrangement results in the encapsulation of the compression unit 10 between the one-piece casing 100 and the housing 200. Both the one-piece casing 100 and the housing 200 have an inner skin presenting a complementary form to the portion of the compression unit they are facing to, the sealed envelope is space-saving. It can also be mentioned that due to the assembly of each part (one-piece casing and housing) around the compression unit, the resulting sealed envelope is maintenance-friendly, as the opening of the sealed envelope to access the compression unit is quite simple.

According to an optional feature of the invention, the heat pump module 500 comprises an acoustic layer 300, typically 15 to 30 mm thick and for example made of foam, disposed between the compression unit 10 and the sealed envelope 510. Interleaving the acoustic layer 300 between the compression unit 10 and the sealed envelope 510 avoids any direct contact between the compression unit 10 and the sealed envelope 510. The acoustic layer 300 contributes to decrease the noise from the compression unit 10 by absorbing the high frequencies emitted by the compression unit 10.

Preferably, the acoustic layer 300 is press fitted onto the compression unit 10. In other words, the acoustic layer is shaped like the compression unit 10. Therefore the acoustic layer is contoured to closer match the shape of the compression unit 10. So configured, the acoustic layer 300 is placed at the closest from the vibration source to better decrease the resulting noise.

Now reverting to the description of figure 1, the sealed envelope 510 extends according to the main axis X as it is intended to accommodate the compression unit 10. The compression unit 10 is intended to be placed in an internal area 512 delimited by an external surface 511 of the sealed envelope 510.

According to the invention, the sealed envelope 510 comprises three supporting paws 51, 52, 53 extending outwards the external surface 511. The supporting paws are contained in a plane parallel to the plane P1. As it will be detailed further on, in a preferred embodiment of the invention, the supporting paws are contained in the plane P1 which is the junction plane between the one-piece casing 100 and the housing 200.

The supporting paws are visible in the lower part of figure 2. A first supporting paw 51 extends according to the main axis X. The second 52 and third 53 supporting paws extend on both sides from the main axis X. In an axial projection on the plane P1, the first supporting paw 51 extends from a side 501 of the external surface 511 from which it arises outwardly to the external surface 511 and along the main axis X. The supporting paw 52 extends from a side 502 of the external surface 511 from which it arises outwardly to the external surface 511. The side 502 is perpendicular to the side 501. From this, it follows that the supporting paw 52 extends along the Y axis, perpendicular to the main axis X. The supporting paw 53 extends from a side 503 of the external surface 511 from which it arises outwardly to the external surface 511. The side 503 is perpendicular to the side 501 and parallel to the side 502. From this, it follows that the supporting paw 53 extends along the Y axis. It is to be understood that the supporting paws 52, 53 extend in opposite directions in relation to each other.

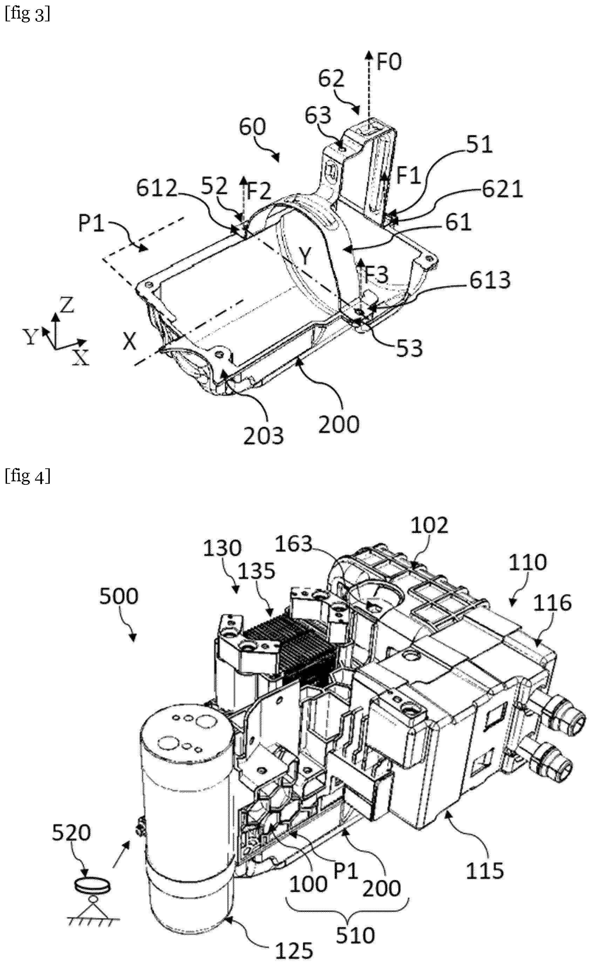

The sealed envelope 510 further comprises a reinforcing element 60 extending between the three supporting paws 51, 52, 53. The reinforcing element 60 may be metallic, for example in steel or aluminium, or may comprise glass fibers. The reinforcing element 60 is configured to be attached to the chassis of the vehicle. As it will be detailed below based on figure 3, the reinforcing element 60 spans the internal area 512. In other words, the reinforcing element 60 interconnects the three supporting paws 51, 52, 53.

The sealed envelope 510 is intended to accommodate the compression unit 10. Due to market demand in cooling capacities, the compression units become heavier over time. The sealed envelope 510 is intended to be suspended to the chassis of the vehicle. It should therefore be able to support the whole weight of the sealed envelope and the compression unit 10. Thanks to the reinforcing element 60 extending from three different sides 501, 502, 503 of the sealed envelope 510, a better distribution of the weight force is operated within the reinforcing element 60. This aspect will be detailed in relation to figure 3.

Figure 3 represents the bottom housing 200 of the heat pump module of the invention with a reinforcing element 60. The reinforcing element 60 comprises two legs 61, 62. A first leg 61 extends from the second supporting paw 52 to the third supporting paw 53. In axial projection in the plane P1, the first leg 61 extends along the Y axis. It connects the supporting paws 52, 53 from two opposite sides of the sealed envelope 510. The second leg 62 extends from the first supporting paw 51 to the first leg 61. In axial projection in the plane P1, the second leg 62 extends along the X axis between the side 501 and the first leg 61. It connects the supporting paw 51 to the first leg 61, which means that the reinforcing element 60 forms a physical connection between the three supporting paws 51, 52, 53 disposed on three different sides of the sealed envelope.

It should be kept in mind that the reinforcing element 60 extends above the internal area 512 in which the compression unit 10 is intended to be lodged. When the compression unit 10 is placed inside the sealed envelope 510, the reinforcing element 60 surrounds the upper portion 11 of the compression unit 10 (as can be seen in figure 1, without the one-piece casing 100 of the sealed envelope 510). The compression unit 10 is disposed inside the internal area 512 and the reinforcing element 60 spans both the internal area and the compression unit. The reinforcing element 60 surrounds the compression unit 10.

The reinforcing element 60 is fixed to the sealed envelope 510 thanks to appropriate fixing means, for example screws.

The first leg 61 comprises a first end 612 and a second end 613, both first end 612 and second end 613 extending in the same plane. When the reinforcing element 60 is placed on the housing 200, the first end 612 is disposed on the second supporting paw 52 and the second end 613 is disposed on the third supporting paw 53. The second leg 62 comprises one end 621 which is coplanar to the first end 612 and second end 613 of the first leg. When the reinforcing element 60 is placed on the housing 200, the end 621 of the second leg 62 is disposed on the first supporting paw 51.

Each of the two ends 612, 613 of the first leg 61 comprises an aperture, and so do the supporting paws 52, 53, so as to screw the first leg 61 to the supporting paws. The end 621 of the second leg 62 may also comprise an aperture facing an aperture of the first supporting paw 51 to enable the screwing of the second leg 62 to the supporting paw 51. The other end of the second leg 62 may be rigidly fixed to the first leg 61 by welding. Alternatively, the reinforcing element 60 may be monolithic, in other words the first leg 61 and the second leg 62 are formed as a single element.

Between its two ends 612, 613, the first leg 61 extends in the form of a circle arc. This particular form enables it to encircle the upper part of the compression unit. The second leg 62 extends between its end 621 and the first leg according to a segmented profile, so as to match the shape of the upper part of the compression unit facing this portion of the reinforcing element 60.

The reinforcing element 60 forms a handle for the sealed envelope 510 and the compression unit 10. It constitutes a robustness element for the sealed envelope. This robustness element is of particular interest due to the weight of this assembly.

In the embodiment represented in figure 3, the supporting paws extend from the housing 200 of the sealed envelope 510. Nevertheless the scope of the invention also covers an embodiment in which the supporting paws extend from the one-piece casing 100 of the sealed envelope 510. In this configuration, the reinforcing element 60 is disposed over the outer skin 102 of the one-piece casing. The housing 200 and the one-piece casing 100, as well as the reinforcing element 60 can be rigidly fixed together by appropriate means such as screws. The one-piece casing 100 can be screwed to the housing 200 via respective apertures in the junction surface 103 and the joining surface 203. And the reinforcing element 60 can be screwed to the one-piece casing 100 at the respective apertures of the supporting paws.

For the sake of compactness, in the configuration where the three supporting paws 51, 52, 53 extend from the one-piece casing 100, the outer skin 102 of the one-piece casing 100 comprises advantageously a first groove extending from the second supporting paw 52 to the third supporting paw 53 and a second groove extending from the first supporting paw 51 to the first groove. The first groove and the second groove respectively constitute a channel for the first leg 61 and the second leg 62 of the reinforcing element 60 in the one-piece casing. The reinforcing member 60 is therefore entirely integrated in the outer surface of the one-piece casing.

Alternatively, and as represented in figures 1 and 3, the three supporting paws 51, 52, 53 extend from the housing 200. When the heat pump module comprises an acoustic layer 300 surrounding the compression unit 10, the acoustic layer 300 advantageously comprises a first groove 301 extending from the second supporting paw 52 to the third supporting paw 53 and a second groove 302 extending from the first supporting paw 51 to the first groove 301. The first groove 301 and the second groove 302 respectively constitute a channel for the first leg 61 and the second leg 62 of the reinforcing element 60 in the acoustic layer 300. The reinforcing member 60 is therefore entirely integrated in the acoustic layer 300.

According to an optional feature of the invention, one of the two legs 61, 62 of the reinforcing element 60 comprises a fixing part 63. As illustrated in figure 3, the second leg 62 comprises the fixing part 63. The outer skin 102 of the one-piece casing 100 of the sealed envelope 510 comprises an aperture 163 facing the fixing part 63. The fixing part 63 is therefore to be reached through the aperture 163. This enables an access from the outside of the heat pump module to the reinforcing element 60. This feature makes it possible to fix the heat pump module to the chassis of the vehicle.

When in use, the sealed envelope 510 accommodating the compression unit 10 is suspended to the chassis of the vehicle. Thanks to the aperture 163, the heat pump module can be fixed to the chassis by appropriate fixing means from the fixing part 63 of the reinforcing element 60.

The heat pump module comprising the sealed envelope 510 and the compression unit 10 is subject to the force Fo when suspended to the chassis. Thanks to the invention, the heat pump module is suspended via the reinforcing element 60 that builds a handle in the form of a curved T-shape around the compression unit 10. As the reinforcing element 60 is rigidly fixed to the sealed envelope 510 at the three supporting paws, the force Fo is distributed from the fixing part 63 to the three supporting paws 51, 52, 53 into, respectively, the forces F1, F2, F3. Therefore the reinforcing element 60 splits the force Fo applied at the fixing part 63 into three forces: F1 at the first supporting paw 51, F2 at the second supporting paw 52 and F3 at the third supporting paw 53. The forces F1, F2, F3 are almost identical and correspond each to one third of the force Fo.

Figure 4 represents a heat pump assembly, comprising the heat pump module 500 of the invention on which air-conditioning or heat pump components are installed. As detailed above, the heat pump module 500 comprises the compression unit 10 disposed inside the sealed envelope 510, optionally with the acoustic layer 300 disposed between the compression unit 10 and the sealed envelope 510.

According to an optional feature of the invention, the outer skin 102 of the one-piece casing 100 comprises at least one housing portion, each configured to accommodate an external component, for example an additional air-conditioning or heat pump component. As a non-limitative example, and as can be seen in figure 4, the outer skin 102 comprises a first housing portion 110 configured to accommodate a heat exchanger, a second housing portion 120 configured to accommodate an accumulator bottle, and/or a third housing portion 130 configured to accommodate a valve block assembly. It is to be noted that the first, second and third housings are examples of possible embodiments. In the framework of the invention, the inner skin 102 may comprise other housings of various forms and dimensions provided that these forms and dimensions correspond to the forms and dimensions of an external component to be connected to the one-piece casing 100.

Contrary to the prior art solutions offering a casing with a smooth outer skin, such a casing enables it to carry additional components, such as air-conditioning components.

The heat pump assembly comprises at least one external component disposed on the one-piece casing 100 of the sealed envelope 510. The external component(s) may be one or more of a heat exchanger 115, 135, an accumulator bottle 125, a valve block assembly. Accommodated in the corresponding housing portion 110, 120, 130 of the one-piece casing 100, the external components are gathered on the one-piece casing 100, in various directions around the one-piece casing. The invention leads to the integration of the external components into the one-piece casing 100. The heat pump assembly can be seen as a single element that includes the air-conditioning or heat pump components carried by the one-piece casing.

As an example, one external component is a heat exchanger 115, preferably a chiller 115. A first part of the heat exchanger is disposed in an internal container 113 of a housing portion 110 of the one-piece casing 100. The chiller 115 is positioned in the housing portion 110 within the internal container 113.

The heat pump assembly according to the invention may further comprise a cover 116 encapsulating a second part of the chiller 115. The cover 116 forms a protection layer of the chiller 115 against external shocks. The cover 116 abuts against an outer rim 112 of the housing portion 110. In other words, a first part of the chiller 115 is accommodated inside the housing portion 110 and a second part of the chiller is accommodated in the cover 116. The cover 116 is rigidly fixed to the housing portion 110 by appropriate fixing means, such as screws.

Even if not depicted in the figures, a similar cover may be associated with the heat exchanger 135.

The heat pump module 500 according to the invention may further comprise decoupling elements 520 connected to the housing 200 and the chassis of the vehicle in which the heat pump assembly is intended to be installed. The decoupling elements 520 may be realized in a soft rubber. Such decoupling elements contribute decreasing the noise from the compression unit 10 by absorbing the low frequencies emitted by the compression unit 10.

Of course, the invention is not limited to the examples which have just been described and numerous adjustments can be made to these examples without departing from the scope of the invention. In particular, the characteristics of different variant embodiments of the invention can be combined to achieve the invention, to the extent that these variants are not incompatible with each other.

## Claims

1. Sealed envelope (510) for a heat pump module (500) for a vehicle, said sealed envelope (510) extending according to a main axis (X) and being intended to encapsulate a compression unit (10) in an internal area (512) delimited by an external surface (511) of the sealed envelope, **characterized in that** it comprises :
- three supporting paws (51, 52, 53) extending outwards the external surface (511), a first (51) of the three supporting paws extending according to the main axis (X) and the second (52) and third (53) of the three supporting paws extending on both sides from the main axis (X), and
- a reinforcing element (60) extending between the three supporting paws (51, 52, 53), said reinforcing element (60) being configured to be attached to the chassis of the vehicle.

2. Heat pump module (500) for a vehicle comprising a sealed envelope (510) according to claim 1, and a compression unit (10) extending according to the main axis (X), said compression unit (10) being disposed in the internal area (512) and encapsulated in the sealed envelope (510).

3. Heat pump module (500) according to claim 2, further comprising an acoustic layer (300), typically 15 to 30 mm thick, disposed between the compression unit (10) and the sealed envelope (510), said acoustic layer being preferably press fitted onto the compression unit.

4. Heat pump module (500) according to claim 2 or 3, wherein the sealed envelope (510) comprises:
- a one-piece casing (100) encapsulating a first (11) of two portions of the compression unit (10), comprising a junction surface (103) surrounding the first portion (11) of the compression unit (10), the one-piece casing comprising an inner skin having a complementary form to the first portion (11) of the compression unit (10), and an outer skin (102),
- a housing (200) encapsulating the second (12) of the two portions of a compression unit (10), said housing comprising a joining surface (203) surrounding the second portion (12) of the compression unit (10) and forming a surface contact with the junction surface.

5. Heat pump module (500) according to claim 4, wherein the reinforcing element (60) comprises two legs (61, 62), a first (61) of the two legs extending from the second supporting paw (52) to the third supporting paw (53) and the second (62) of the two legs extending from the first supporting paw (51) to the first leg (61).

6. Heat pump module (500) according to claim 5, wherein the three supporting paws (51, 52, 53) extend from the one-piece casing (100) and the outer skin (102) of the one-piece casing (100) comprises a first groove extending from the second supporting paw (52) to the third supporting paw (53) and a second groove extending from the first supporting paw (51) to the first groove.

7. Heat pump module according to claim 5 in combination with claim 3, wherein the three supporting paws (51, 52, 53) extend from the housing (200) and the acoustic layer (300) comprises a first groove (301) extending from the second supporting paw (52) to the third supporting paw (53) and a second groove (302) extending from the first supporting paw (51) to the first groove (301).

8. Heat pump module (500) according to claim 7, wherein one of the two legs (61, 62) of the reinforcing element (60) comprises a fixing part (63) and the outer skin (102) of the one-piece casing (100) comprises an aperture (163) facing the fixing part (63).

9. Heat pump module (500) according to any one of claims 4 to 8, wherein the outer skin (102) of the one-piece casing (100) comprises at least one housing portion (110, 120, 130) configured to accommodate an external component among a heat exchanger, an accumulator, a valve block assembly, said housing portion (110, 120, 130) comprising an interconnection surface (111, 121, 131) being of complementary form to said external component.

10. Heat pump module (500) according to any one of claims 4 to 9, further comprising decoupling elements (520) connected to the housing (200) and a chassis of the vehicle, in particular at least one decoupling element (520) connected to the reinforcing element (60) and said chassis of the vehicle.
